# EUROPÄISCHE PATENTANMELDUNG

(11) **EP 0 900 686 A2**
(43) Veröffentlichungstag der Anmeldung: **10.03.1999**
(21) Anmeldenummer: 98115412.3
(22) Anmeldetag: 17.08.1998
(51) Int. Cl.: B60K 35/00

(54) **Verstellbare Anzeigemarkierung**

(30) Priorität: 05.09.1997 DE 19739037
(71) Anmelder: Valeo Electronics GmbH & Co. KG, 75196 Remchingen (DE)
(72) Erfinder: Barth, Manfred, 75323 Bad Wildbad (DE); Renken, Toni, 75196 Remchingen (DE); Ziegler, Wolfgang, Dr., 76307 Ittersbach (DE)
(74) Vertreter: COHAUSZ HANNIG DAWIDOWICZ & PARTNER

(57) **Zusammenfassung**

Analoganzeigeinstrument insbesondere für eine Kraftfahrzeugarmaturentafel mit einer feststehenden Skala und einer in Bezug auf die Skala bewegbaren Zeigeeinrichtung, wobei an der Skala mindestens eine Markierung ist, die einen besonderen Wert oder die Grenze eines Warnbereiches auf der Skala kennzeichnet, wobei die Markierung (10,20) auf einem im Verhältnis zur Skala (4,5,21) bewegbaren Träger (11) angebracht ist und wobei der Träger (11) der Markierung ein kreis- oder kreisbogenförmiger Trägerring ist, der um das Zentrum der Skala drehbar ist.

## Beschreibung

Die Erfindung betrifft ein Analoganzeigeinstrument insbesondere für eine Kraftfahrzeugarmaturentafel mit einer feststehenden Skala und einer in Bezug auf die Skala bewegbaren Zeigeeinrichtung, wobei an der Skala mindestens eine Markierung angebracht ist, welche die Grenze eines Warnbereiches auf der Skala kennzeichnet.

Es ist bekannt, bei derartigen Analoganzeigeinstrumenten wie beispielsweise Tachometern oder Drehzahlmessern die Skala an einem bestimmten Wert oder in einem Bereich, bei dem die angezeigte Betriebsgröße ein kritisches Maß annimmt, durch eine farbige Markierung zu kennzeichnen. Durch das Eintreten des Zeigers in den markierten Warnbereich wird der Fahrer optisch auf den besonderen Zustand aufmerksam gemacht. Die Warnfunktion kann dabei durch leuchtende Markierungen unterstützt werden.

Bekanntermaßen sind die kritischen Werte der Betriebsgrößen abhängig von anderen Betriebsgrößen des Fahrzeuges. So ist beispielsweise die maximale dem Motor zumutbare Drehzahl stark von der Temperatur des Motors abhängig, die durch die Öl- oder Wassertemperatur beobachtbar ist. Bei niedrigen Temperaturen liegt der Warnbereich bei geringeren Drehzahlen. Eine Anpassung des Warnbereiches an die tatsächlichen Betriebsparameter des Fahrzeuges ist mit den bekannten Instrumenten nicht oder nur mit hohem technischen Aufwand möglich. So ist es beispielsweise bekannt, entlang einer Skala mehrere nebeneinander liegende Leuchtbereiche anzuordnen, die getrennt eingeschaltet werden können und damit eine optische Markierung verändern. Diese Art einer veränderlichen Markierung ist konstruktiv aufwendig und bietet lediglich eine geringe Auflösung zweier getrennt zu markierender Werte entlang einer Skala.

Aufgabe der Erfindung ist es, ein Analoganzeigeinstrument insbesondere für Kraftfahrzeuge zu schaffen, das bei einfacher Konstruktion und kostengünstiger Herstellung die Veränderung einer Markierung entlang einer feststehenden Skala mit einer hohen Auflösung zweier benachbarter Werte ermöglicht.

Diese Aufgabe wird durch ein Analoganzeigeinstrument nach Anspruch 1 gelöst.

Da erfindungsgemäß die einen besonderen Wert oder die Grenze eines Warnbereiches auf der Skala kennzeichnende Markierung auf einem im Verhältnis zur Skala bewegbaren Träger angebracht ist, ist eine kontinuierliche Veränderung der Markierung möglich. Dabei ist die entlang der Skala verstellbare Markierung derart ausgebildet, daß sie deutlich von der Skala und den die Skala bemessenden und an der Skala angebrachten Werten zu unterscheiden ist.

Wegen der genannten kontinuierlichen Veränderbarkeit kann bei entsprechender Auslegung des Antriebes, der in einer vorteilhaften Ausführungsform durch einen Schrittmotor bewerkstelligt wird, eine besonders hohe Auflösung zweier benachbarter zu markierender Werte erreicht werden.

Es ist ein großer Vorteil der Erfindung, daß eine Anpassung der markierten Warnbereiche an andere Betriebsgrößen des Fahrzeuges möglich wird. Z.B. wird bei kaltem Motor die erlaubte Grenzdrehzahl automatisch auf kleinere Werte herabgesetzt. Dabei erfolgt die Steuerung der verstellbaren Anzeigemarkierung durch eine integrierte Recheneinheit, in der beliebige Abhängigkeiten zwischen Betriebsgrößen registriert und rechnerisch verarbeitet werden können.

In einer anderen Ausführungsform wird die verstellbare Anzeigemarkierung benutzt, um die vorgewählte Geschwindigkeit bei einer Geschwindigkeits-Automatik ("Tempomat") auf dem Tachometer anzuzeigen. Gerade bei dieser Anwendung ist die vergleichsweise hohe Auflösung der Anzeigemarkierung von großem Vorteil. Die Anzeigemarkierung läßt sich jedoch ebensogut für ähnliche Anwendungen einsetzen. In einer besonderen Ausführungsform ist es sogar möglich, daß die Markierungen an Skalen durch den Fahrer selber vorgenommen werden.

Eine besonders einfache Konstruktion des erfindungsgemäßen Anzeigeinstrumentes ist gegeben, wenn die Markierung auf einem kreis- oder kreisbogenförmigen Trägerring aufgebracht ist, der um das Zentrum der Skala drehbar ist. Es ist dabei besonders vorteilhaft, daß die einfache Konstruktion mit geringen Herstellungskosten einhergeht. Zudem ist der Aufbau des Anzeigeinstrumentes besonders kompakt, so daß eine einfache Montage und gleichzeitig eine komfortable Wartung des Instrumentes möglich wird.

Durch die Verwendung von Leuchtdioden oder Leuchtelementen, die von Leuchtdioden beleuchtet werden, kann eine hohe Leuchtkraft der Markierungen und damit eine große Auffälligkeit der Warnbereiche erreicht werden. Das trägt zu einer Erhöhung des Fahrkomforts und der Fahrsicherheit bei. Insbesondere ist es möglich, die Markierung durch den Einsatz verschiedener Farben besonders hervorzuheben. Die Schrittmotoren sind vorteilhafterweise auf einer gemeinsamen Trägerplatte angebracht, die eine Leiterplatte sein kann. Bei der Verwendung einer einzigen Trägerplatte ist eine besonders ökonomische Lösung gegeben. Ausführungsbeispiele der erfindungsgemäßen verstellbare Anzeigemarkierung sind in den Zeichnungen dargestellt und werden im folgenden näher beschrieben.

Es zeigen:
- **Fig. 1**: die Vorderseite eines Drehzahlmessers mit verstellbarem Warnbereich,
- **Fig. 2**: die Rückseite dieses Drehzahlmessers und
- **Fig. 3**: einen Tachometer mit verstellbarer Anzeigemarkierung.

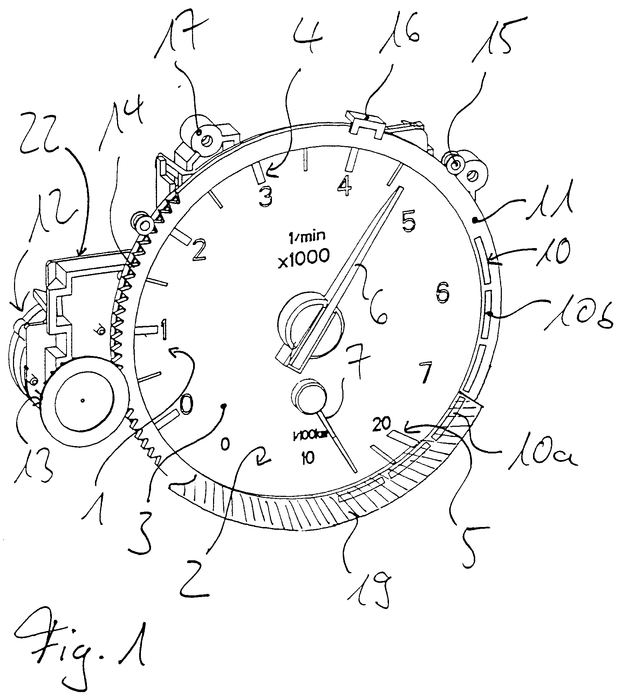

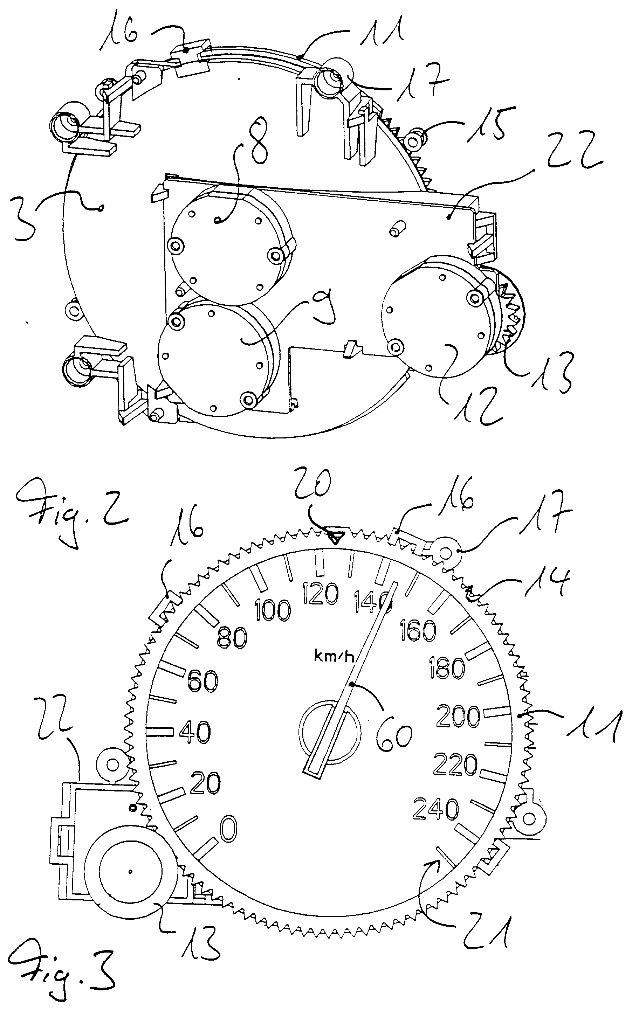

In Figur 1 ist ein Analoganzeigeinstrument für eine Kraftfahrzeugarmaturentafel mit einem Drehzahlmesser 1 und einer Kraftstoff-Verbrauchsanzeige 2 dargestellt. Auf einer für den Fahrer sichtbaren, runden und feststehenden Anzeigetafel 3 in der Form eines Zifferblattes ist die von 0 bis 7000 Umdrehungen pro Minute reichende Skala 4 des Drehzahlmessers 1 und ebenso die Skala 5 der KraftstoffVerbrauchsanzeige 2 aufgebracht. Jede der feststehenden kreisbogenförmigen Skalen 4 und 5 wird von einem jeweils zentral angeordneten drehbaren Zeiger 6 und 7 überstrichen. Die Zeiger, hier Zeigernadeln 6 und 7, werden von auf der Rückseite des Instrumentes angebrachten Schrittmotoren 8 und 9 betrieben (Figur 2). Die Schrittmotoren 8, 9 sind auf einer feststehenden Trägerplatte 22 befestigt.

Entlang der Skala 4 sind im Bereich hoher Drehzahlen Markierungen 10 angeordnet, mit denen ein Warnbereich gerade noch vertretbarer Maximaldrehzahlen bezeichnet werden kann. Überschreitet der Zeiger 6 die Grenze dieses Warnbereiches, wird der Fahrer optisch auf diese Grenzsituation hingewiesen.

Die Markierungen 10 sind auf einem im Verhältnis zur Anzeigetafel 3, hier Anzeigescheibe aus Kunststoff, und der Skala 4 bewegbaren Träger 11 angebracht. Der Träger 11 ist ein flacher Trägerring, der um das von der Welle des Zeigers 6 definierte Zentrum der Skala drehbar ist. Damit sind die auf dem Träger 11 aufgebrachten Markierungen 10 in Umfangsrichtung der Anzeigetafel 3 entlang der Skala 4 verstellbar.

Die Verstellung des Trägers 11 in Umfangsrichtung geschieht über einen Schrittmotor 12, auf dessen Antriebswelle ein Zahnrad 13 angeordnet ist, das in einen am äußeren Umfang des Trägers 11 angeordnete Zahnkranz mit Außenverzahnung 14 eingreift. In einer nicht dargestellten Ausführungsform greift das Zahnrad 13 in einen am Innenumfang des Trägers 11 angeordneten Zahnkranz mit Innenverzahnung ein. Der Träger 11 kann kreis- oder kreisbogenförmig sein. Hier ist der Träger 11 ein Ring, der die Skalen 4 und 5 umgibt. Der ringförmige Träger 11 wird von Führungsrollen 15 und von Klammern 16 in achsialer Richtung gehalten.

Der Schrittmotor 12 ist vorteilhafterweise auf der Trägerplatte 22 befestigt, wobei die Trägerplatte 22 in dieser Ausführungsform eine Leiterplatte ist. Der Schrittmotor 12 ist in Abhängigkeit einer Betriebsgröße, z.B. einer Temperatur des Fahrzeuges steuerbar.

Das kompakte Analoganzeigeinstrument wird mittels Halterungen 17 an einem nicht dargestellten Gehäuse, welches das ganze Instrument umgibt, gehalten. Die Halterungen 17, hier als Ohren bezeichnet, sind einstückig mit der Anzeigescheibe 3 verbunden, während die Trägerplatte 22 durch Einrasten mit dem Gehäuse verbunden ist. Das Gehäuse ist mit nicht dargestellten Zapfen für die Führungsrollen 15 versehen. Die Anzeigescheibe 3 trägt die Klammern 16, die elastisch mit der Anzeigescheibe 3 verbunden sind.

Die Markierungen 10 sind im Falle des Drehzahlmessers im Träger 11 befindliche Leuchtelemente 10, die von einer nicht dargestellten Lichtquelle z.B. einer Leuchtdiode über einen Lichtleiter beleuchtet werden. In einer anderen Variante sind die Leuchtelemente selber von LED's gebildet.

Die Leuchtelemente 10 haben die Form von Balken, deren Länge dem Abstand zweier Striche auf der Skala 4 entspricht. Um die für den Fahrer irrelevanten Markierungen 10a, die über der Maximaldrehzahl (hier 7000 U/min) liegen zu verbergen, werden diese Markierungen 10a mit einer undurchsichtigen und feststehenden Blende 19 verdeckt. Hinter der Blende 19 treten dann im Betrieb die relevanten Markierungen 10b hervor.

In Figur 2 ist deutlich zu erkennen, daß die Anzeigetafel 3 und der Träger 11 zwei übereinander liegende, konzentrische Scheiben sind, die mittels des Antriebes über den Schrittmotor 12 gegeneinander verdrehbar sind. Die Steuerung der Schrittmotoren erfolgt mittels einer nicht dargestellten elektronischen Rechnereinheit, in der beliebige Abhängigkeiten zwischen Betriebsgrößen des Fahrzeugs registriert und rechnerisch verarbeitet werden können.

In Figur 3 ist ein Geschwindigkeitsmesser (Tachometer) mit einem Zeiger, hier Anzeigenadel 60, einer kreisbogenförmigen Skala 21 und einer Anzeigemarkierung 20 gezeigt, wobei die Markierung 20 von einer auf den Zahnkranz 14 aufgebrachten Leuchtdiode (LED) gebildet ist. In dieser Ausführungsform kennzeichnet die Markierung 20 einen besonderen Wert (hier 122 km/h) auf der Skala 21. Durch diese Anzeigemarkierung 20 kann die voreingestellte Geschwindigkeit eines Tempomaten bezeichnet werden. Die Mechanik und der Antrieb des bewegbaren Träger 11 ist entsprechend dem Ausführungsbeispiel nach Figur 1 ausgeführt.

Die Zeiger 6, 60 können eine andere Form haben. So ist das Analoganzeigeinstrument mit einer in Bezug auf die Skalen 4 bzw. 21 bewegbaren Zeigeeinrichtung versehen.

In den Ausführungsbeispielen bildet das Zahnrad 13 gleichfalls einen Anschlag für den Trägerring 11. Der Außendurchmesser des Trägerringes ist größer dabei als der Außendurchmesser der Anzeigetafel 3. Somit ist die achsiale Sicherung des Trägerringes 11 sowohl durch das Zahnrad 13 als auch durch die Klammern 16 gewährleistet.

In einer nicht dargestellten Ausführungsform ist der Außenduchmesser des Trägerringes kleiner als der Außenduchmesser der Anzeigetafel 3. Die achsiale Sicherung des Trägerringes wird dann durch das Zahnrad 13 und den Trägerring gegeben. Der ringförmige Träger 11 wird von Führungsrollen 15 in radialer Richtung gehalten.

## Patentansprüche

1. Analoganzeigeinstrument insbesondere für eine Kraftfahrzeugarmaturentafel mit einer feststehenden Skala und einer in Bezug auf die Skala bewegbaren Zeigeeinrichtung, wobei an der Skala mindestens eine Markierung ist, die einen besonderen Wert oder die Grenze eines Warnbereiches auf der Skala kennzeichnet,
**dadurch gekennzeichnet,** daß die Markierung (10,20) auf einem im Verhältnis zur Skala (4,5,21) bewegbaren Träger (11) angebracht ist.

2. Anzeigeinstrument nach Anspruch 1,
**dadurch gekennzeichnet,** daß der Träger (11) der Markierung ein kreis- oder kreisbogenförmiger Trägerring ist, der um das Zentrum der Skala drehbar ist.

3. Anzeigeinstrument nach Anspruch 1 oder 2,
**dadurch gekennzeichnet,** daß der Träger (11) ein Ring ist, der die Skala umgibt.

4. Anzeigeinstrument nach einem der vorherigen Ansprüche,
**dadurch gekennzeichnet,** daß der Träger (11) einen Zahnkranz (14) mit einer Innen- oder Außenverzahnung aufweist.

5. Anzeigeinstrument nach einem der vorherigen Ansprüche,
**dadurch gekennzeichnet,** daß der Zahnkranz (14) am äußeren Rand der Trägerscheibe (11) angebracht ist.

6. Anzeigeinstrument nach einem der vorherigen Ansprüche,
**dadurch gekennzeichnet,** daß der Träger (11) von einem Antrieb insbesondere von einem Schrittmotor (12) antreibbar ist.

7. Anzeigeinstrument nach einem der vorherigen Ansprüche,
**dadurch gekennzeichnet,** daß auf der Antriebswelle des Schrittmotors (12) ein Zahnrad (13) angeordnet ist, das in die Verzahnung (14) am Träger (11) eingreift.

8. Anzeigeinstrument nach Anspruch 7,
**dadurch gekennzeichnet,** daß das Zahnrad (13) einen Anschlag für den Trägering (11) bildet.

9. Anzeigeinstrument nach einem der vorherigen Ansprüche,
**dadurch gekennzeichnet,** daß die Markierung (10,20) eine Leuchtdiode (LED) aufweist.

10. nzeigeinstrument nach einem der vorherigen Ansprüche,
**dadurch gekennzeichnet,** daß die Markierung (10,20) ein von einer Lichtquelle über einen Lichtleiter beleuchtetes Leuchtelement aufweist.

11. Anzeigeinstrument nach Anspruch 10,
**dadurch gekennzeichnet,** daß mehrere Leuchtelemente vorgesehen sind und daß einige Leuchtelemente mit einer undurchsichtigen und feststehenden Blende (19) verdeckt sind.

12. Anzeigeinstrument nach einem der vorherigen Ansprüche,
**dadurch gekennzeichnet,** daß die Skala (4,5,21) kreisbogenförmig ist und daß die Zeigereinrichtung eine um eine Achse drehbare Zeigernadel (6,60) ist.

13. Anzeigeinstrument nach einem der vorherigen Ansprüche,
**dadurch gekennzeichnet**, daß der Schrittmotor (12) in Abhängigkeit einer Betriebsgröße z.B. einer Temperatur des Fahrzeugs steuerbar ist.

14. Anzeigeinstrument nach Anspruch 13,
**dadurch gekennzeichnet**, daß die Steuerung von einer elektronischen Recheneinheit vorgenommen wird.

15. Anzeigeinstrument nach einem der vorherigen Ansprüche,
**dadurch gekennzeichnet,** daß die Schrittmotoren auf einer gemeinsamen Trägerplatte (22), insbesondere einer Leiterplatte, angebracht sind.

16. Verwendung des Anzeigeinstrumentes nach den vorherigen Ansprüchen zur Markierung des vorgebbaren Geschwindigkeitswertes eines Tempomaten auf der Geschwindigkeitsskala eines Tachometers.
